# FASCICULE DE BREVET EUROPEEN

(11) **EP 1 029 252 B1**
(45) Date de publication et mention de la délivrance du brevet: **26.03.2003**
(21) Numéro de dépôt: 98950171.3
(22) Date de dépôt: 22.10.1998
(51) Int. Cl.: G02B 27/22, H04N 13/00, G03B 35/24

(54) **DISPOSITIF DE VISUALISATION D'UNE IMAGE STEREOSCOPIQUE**
STEREOSKOPISCHE BILDANZEIGE
DEVICE FOR DISPLAYING A STEREOSCOPIC IMAGE

(30) Priorité: 05.11.1997 FR 9713900
(43) Date de publication de la demande: 23.08.2000
(73) Titulaire: ALLIO, Pierre, 75020 Paris (FR)
(72) Inventeur: ALLIO, Pierre, 75020 Paris (FR)
(74) Mandataire: Jacquard, Philippe Jean-Luc
(86) Numéro de dépôt international: FR9802254
(87) Numéro de publication internationale: WO99023522

(56) Documents cités:
- WO-A-94/25891
- WO-A-94/26071
- FR-A- 2 748 579
- US-A- 2 021 162
- US-A- 3 932 699

## Description

La présente invention concerne un dispositif de visualisation d'une image stéréoscopique comportant N points de vue, ledit dispositif comportant un réseau lenticulaire comprenant des lenticules cylindriques et ayant des axes longitudinaux parallèles à une première direction perpendiculaire à un axe optique du dispositif.

Pour réaliser une visualisation sans lunettes d'une image stéréoscopique à N points de vue (ou images élémentaires), il est connu d'afficher sur un écran une image imbriquée sous forme de colonnes de pixels, la première image élémentaire étant constituée par les pixels de la première colonne de pixels et par les pixels des autres colonnes espacées de celle-ci modulo n, la deuxième image élémentaire étant constituée par les pixels de le deuxième colonne et ceux des colonnes équidistantes de celle-ci modulo n et ainsi de suite.

Une vision stéréoscopique sans lunette est obtenue en plaçant au voisinage de l'écran un réseau lenticulaire comprenant des lenticules cylindriques placés côte à côte.

Chaque lenticule du réseau lenticulaire présente une largeur correspondant à n colonnes de points image ou pixels.

Les termes "ligne" et "colonne" désignent respectivement les rangées horizontales et les rangées verticales de pixels vues par un observateur debout ou assis, indépendamment par exemple de la direction de balayage, horizontale ou verticale, d'un tube cathodique de visualisation. Par exemple, pour un écran cathodique dont les lignes de balayage sont disposées verticalement, on considérera ces "lignes de balayage" comme des colonnes au sens du présent texte.

En raison du caractère imbriqué des images, la qualité de ces dispositifs de visualisation est dépendante de la qualité avec laquelle est réalisé le réseau lenticulaire qui comporte M/N lenticules, M désignant le nombre de pixels d'une ligne d'une image vidéo dans le standard choisi, ainsi que de l'alignement optique du réseau lenticulaire et de la qualité du réglage de l'écran cathodique, et ce afin d'éviter la présence de moirés.

La présente invention a pour objet un dispositif de visualisation stéréoscopique sans lunettes, qui soit plus simple à mettre en oeuvre et qui convienne plus particulièrement à des applications telles que les visiophones, les visionneuses diapo ou film notamment pour les tables de montage ou bien encore les visuels de casque.

L'idée de base de l'invention est d'afficher, notamment sur un écran, une image en mode dit "N images" par exemple selon la procédure décrite dans les Brevets US-A-2021162, FR 2 705 007 et FR 2 704 951 du Demandeur, et de désanamorphoser optiquement ces N images de manière appropriée à leur visualisation stéréoscopique sans lunettes.

Un mode de réalisation principal du dispositif selon l'invention est récité dans la revendication 1.

Un autre mode de réalisation principal de l'invention est récité dans la revendication 4. Les revendications dépendantes définissent des modes de réalisation additionnels.

Le rapport entre la distance focale de l'ensemble optique cylindrique et la distance focale du réseau lenticulaire est sensiblement égal à nₒ, nₒ>1 étant le rapport de désanamorphose (entier ou non entier) souhaité, et le réseau lenticulaire et l'ensemble optique cylindrique ont un plan objet commun dans lequel est disposée ladite image stéréoscopique à visualiser qui est constituée de N images stéréoscopiques (avec N>1) anamorphosées dans un rapport n>1, et en général égal à N, mais qui peut être différent par exemple dans le cas d'un changement de format parallèlement à la deuxième direction. Dans le cas d'une lentille de champ, un observateur disposé selon une position de visualisation située en aval de l'élément optique convergent voit avec chaque oeil une des deux images désamorphosées d'un couple stéréoscopique.

Le dispositif convient à la visualisation d'images affichées sur un dépoli ou sur un écran cathodique ou autre, ou bien encore à la visualisation de diapositives ou de films éclairés à l'aide d'une source de lumière répartie, c'est-à-dire d'images disponibles directement sur un support physique présent dans le plan commun, sans adjonction d'une optique de projection telle que celle d'un projecteur.

Selon un mode de réalisation préféré, le plan de la pupille de l'élément optique convergent et le plan de l'image stéréoscopique à visualiser sont conjugués à travers le système constitué par l'ensemble optique cylindrique et le réseau lenticulaire. La position peut être décalée par rapport à la position de conjugaison, en particulier pour suivre le plan de collimation des axes optiques de visualisation.

L'élément optique convergent de la lentille de champ peut être un miroir par exemple sphérique et de préférence parabolique, au moins partiellement réfléchissant. Il est dans ce cas préférable, en particulier pour réaliser un visuel de casque, que l'ensemble optique cylindrique et le réseau lenticulaire soient décentrés selon la première direction.

Il est particulièrement avantageux que le dispositif comporte un miroir plan au moins partiellement réfléchissant incliné par rapport à l'axe optique. Ceci limite l'encombrement horizontal ce qui est particulièrement favorable aux applications en visiophonie.

Selon un mode de réalisation préféré, le miroir plan est partiellement réfléchissant et le dispositif comporte une caméra de prise de vue stéréoscopique disposée de manière à filmer à travers le miroir plan un observateur disposé à la position de visualisation, et qui regarde sans lunettes spéciales l'image stéréoscopique, ce qui permet de réaliser une visiophonie dans les deux sens, ou bien une téléconférence, ou bien encore un miroir vidéo, dans lequel l'observateur se voit lui-même avec éventuellement des modifications ou des incrustations numériques.

Le dispositif peut comporter successivement de l'amont vers l'aval ledit réseau lenticulaire, ledit ensemble optique cylindrique convergent, ledit élément optique convergent et une paire de réseaux lenticulaires. Ceci permet d'obtenir une visualisation directe d'un écran E, d'un film ou d'une diapo éclairés, ou bien encore à partir d'un projecteur équipé d'une optique de projection.

D'autres caractéristiques et avantages de l'invention apparaitront mieux à la lecture de la description qui va suivre, donnée à titre d'exemple non limitatif, en liaison avec les dessins ci-annexés dans lesquels :
- la figure 1 représente un dispositif de visualisation selon la présente invention ;
- la figure 2 représente une variante de l'invention dans laquelle l'élément faisant fonction de lentille de champ est un miroir ;
- la figure 3 représente une deuxième variante de l'invention, utilisable en particulier pour la visiophonie en relief bi-directionnelle ;
- la figure 4 représente un dispositif de rétro-projection selon l'invention,
- et la figure 5 représente une variante préférée de visualisation directe.

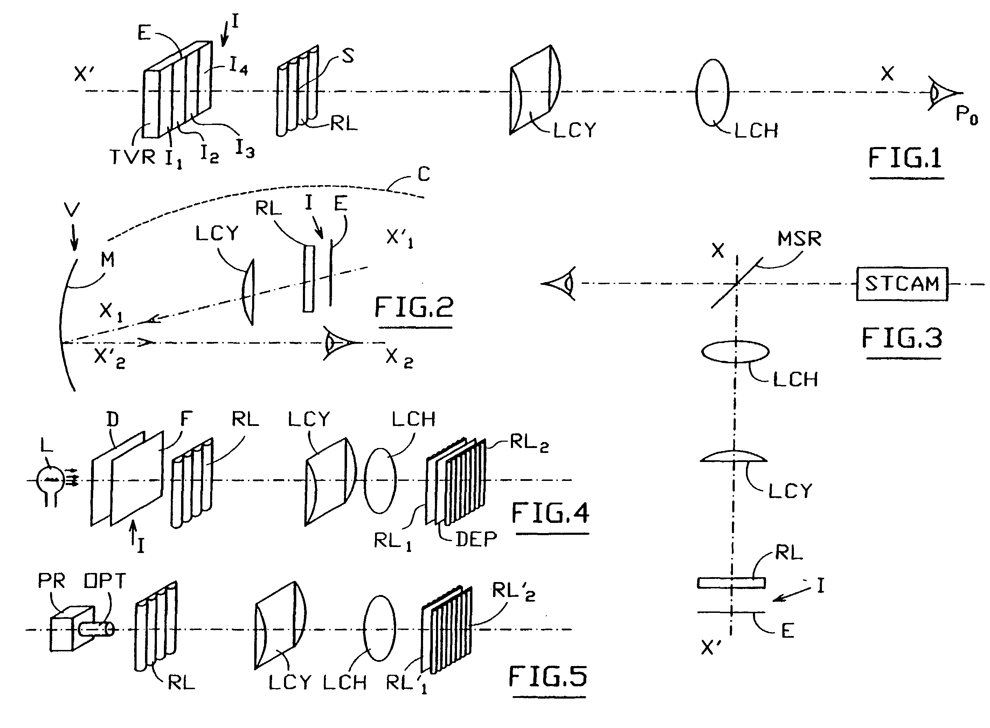

Selon la figure 1, une image I présentant N=4 images élémentaires I₁ ... I₄ est affichée avec un pas P sur l'écran E d'un moniteur de vidéo TVR. L'écran E est placé sur un plan objet défini ci-après d'un réseau lenticulaire RL présentant n=4 lenticules convexes jointifs de pas p (par exemple p=P). Chacun de ces lenticules a un axe longitudinal parallèle à celui (vertical) des images élémentaires I₁ ... I₄. Le réseau lenticulaire RL intersecte l'axe optique X'X au niveau de son centre optique S. Une lentille cylindrique LCY (ou un doublet convergent de lentilles cylindriques permettant en particulier de faire varier la focale) de distance focale sensiblement égale à n fois celle des lenticules du réseau RL est croisée avec le réseau RL, c'est-à-dire que son axe longitudinal est horizontal et perpendiculaire à l'axe X'X. En outre, le plan objet de la lentille LCY est de préférence confondu avec le plan objet du réseau RL et avec le plan de l'écran E. Une lentille de champ LCH, par exemple une lentille convergente ou une lentille de Fresnel, permet de faire converger les rayons issus du réseau RL et de la lentille LCY sur les yeux d'un observateur situé dans une position de visualisation Pₒ pour laquelle ses yeux voient par exemple, soit le couple stéréoscopique I₁, I₃, soit le couple stéréoscopique I₂, I₄, le passage d'un couple stéréoscopique à l'autre s'effectuant par translation de la tête de l'observateur parallèlement à l'écran E. Le grandisssement des pupilles (images du réseau lenticulaire) peut être choisi pour que l'observateur voie soit un couple stéréo soit (I₁,I₂) soit (I₂,I₃) soit (I₃,I₄).

Une condition avantageuse de visualisation est celle pour laquelle la pupille de la lentille de champ LCH est conjuguée du plan de l'écran E, à travers RL et LCY.

Pour effectuer un tel réglage, on remplace l'écran E par un dépoli, on colle un repère sur une face de la lentille LCH et on l'éclaire par l'aval. La conjugaison est obtenue à la position de la lentille pour laquelle le repère est net sur le dépoli. Cette procédure permet de contrôler le réglage de la position du réseau RL et de la lentille LCY. Par exemple, un repère ponctuel est placé à la pupille de la lentille LCH. En enlevant la lentille LCY, le réseau RL forme N images constituées de lignes verticales, qui doivent être amenées en déplaçant RL selon X'X à la finesse la plus grande possible. On ajoute LCY, et on la déplace selon l'axe X'X jusqu'à obtenir N points nets au plan de l'écran E. Une fois ces réglages effectués, l'observateur se positionne sur l'axe X'X jusqu'à ce qu'il se trouve à la distance convenable d'observation.

Selon la figure 2, l'écran E (N=2), le réseau lenticulaire RL à deux lenticules et la lentille cylindrique LCY sont décentrés verticalement pour définir un axe X'₁X₁ descendant en direction d'un miroir convergent de renvoi M par exemple sphérique mais de préférence parabolique qui replie l'axe optique X'₁X₁ en un axe optique X'₂X₂ qui, dans le cas d'un visuel de casque, peut être sensiblement horizontal ou incliné vers le bas. Ce miroir joue le rôle de la lentille de champ et permet de définir la position de visualisation. Dans le cas d'un casque C, le miroir M constitue de manière connue en soi la visière V du casque. Il peut être totalement réfléchissant, ou bien, si on veut permettre au porteur du casque de voir, également à l'extérieur (système dit à "réalité augmentée"), il peut être partiellement réfléchissant et par exemple semi-réfléchissant.

La position de la lentille de champ LCH ou du miroir M peut être légèrement déplacée par rapport à la position de conjugaison précitée pour renvoyer à une distance choisie, c'est-à-dire au point d'observation Pₒ, les pupilles de l'image du réseau lenticulaire de sorte que la vergence et l'acccomodation oculaires se correspondent.

Si on rapproche le réseau lenticulaire RL et la lentille LCY de l'écran E, l'image de l'écran E à travers RL et LCY est située en aval de la lentille de champ LCH (ou du miroir M), et si on l'écarte, elle devient située en amont de la lentille LCH (ou du miroir M).

On ajuste ainsi la position du plan image de l'image à visualiser I (qui est un objet au sens optique du terme) à travers le réseau lenticulaire RL et l'ensemble optique cylindrique (LCY).

Pour éviter la distorsion liée à la dissociation entre la vergence et l'accomodation, qui est dans tous les cas fatigante, on ajuste le rapport entre les pas P des points de vue ou images élémentaires d'un couple stéréoscopique à visualiser et le pas p des lenticules du réseau RL pour que les images des centres de chaque point de vue à travers RL et LCY se superposent au plan de ladite image de l'écran E à travers RL et LCY. Ce réglage peut être effectué en affichant sur l'écran des mires positionnées aux centres des points de vue. Cette condition peut correspondre ou non au cas où les images sont disposées et jointives côte à côte. Il en va de même pour les lenticules du réseau lenticulaire RL qui peuvent être jointifs, mais également espacés.

Il est possible en conservant ou non la lentille de champ LCH de disposer un écran de rétro-projection ERP (fig.4) connu en soi et comportant un dépoli (DEP) placé en sandwich entre deux réseaux cylindriques (RL₁,RL₂) par exemple des réseaux lenticulaires et/ou à barrière de parallaxe à l'endroit où on a formé l'image réelle de l'écran E via le réseau lenticulaire RL et LCY.

Les modes de réalisation des figures 1 à 4 conviennent également à la visualisation d'une diapositive, ou d'un film, éclairés à l'aide d'une source de lumière répartie, par exemple une lampe L et un dépoli D, sans adjonction d'une optique de projection telle que l'optique d'un projecteur.

L'écran de projection peut être également un écran de projection directe, en conservant seulement le dépoli DEP et le réseau lenticulaire RL₁.

A partir de la figure 4, il est possible de réaliser un dispositif de visualisation directe de type "modulo" à partir de l'image I disposée au plan objet précité en enlevant le dépoli DEP, mais en conservant la lentille de champ LCY. L'image à visualiser peut être dans ce cas affichée sur un dépoli ou sur un écran, ou bien être une diapositive ou un film éclairé en lumière répartie, sans adjonction d'une optique de projection telle que celle d'un projecteur.

A la figure 5, un dispositif de visualisation directe de type "modulo" présente une paire de réseaux lenticulaires RL'₁ et RL'₂ de même pas ou de pas voisins qui sont disposés tête bêche en aval de l'ensemble optique cylindrique (LCY). Sa position le long de l'axe X'X n'est pas critique, mais la position optimale est le plan de l'image de l'écran E à travers RL et LCY.

Dans l'exemple particulier représenté à la figure 5, l'image I n'est pas disposée en tant qu' "objet" au sens optique du terme au plan objet commun précité, mais elle est projetée par un projecteur P pourvu d'une optique de projection OPT, à travers RL, LCY et LCH. L'optique de projection OPT cadre l'image à projeter dans ledit plan objet commun précité. Les deux réseaux RL'₁ et RL'₂ sont disposés en aval de LCY, et leur pas peut être choisi de la même façon que celui des réseaux RL₁ et RL₂.

A la figure 3, l'axe X'X vertical est un miroir plan MSR, au moins partiellement réfléchissant, disposé à 45°, qui permet de renvoyer les rayons lumineux selon un axe optique d'observation horizontal. Ceci convient au cas des exemplés décrits en référence aux figures 1, 4 et 5.

L'observateur qui voit sans lunettes spéciales un couple stéréoscopique grâce au renvoi que produit le miroir MSR, peut être lui-même filmé par une caméra stéréoscopique STCAM par exemple telle que décrite dans les Brevets français FR 2 705 007 et FR 2 704 951 précités. Ceci permet de réaliser une visiophonie bi-directionnelle ou bien une téléconférence, chaque intervenant bénéficiant du même équipement, ou bien encore un "miroir vidéo".

Ci-dessus, on a décrit un dispositif dans lequel le nombre des lenticules de réseau RL était égal à celui des N images élémentaires affichées en mode dit "N images". Il est possible pour une observation directe à travers la lentille LCH, de mettre en oeuvre un plus grand nombre de lenticules qui peut être par exemple supérieur à 2N et qui est par exemple égal à un multiple hN du nombre de points de vue, en conservant la même focale pour conserver le rapport de désanamorphose nₒ. On notera que le nombre de lenticules peut être quelconque. Pour l'observateur placé au point Pₒ (fig.1), le nombre de pupilles augmente d'autant et leur largeur diminue d'autant. Les conditions de réglage restant les mêmes, le déplacement de la tête de l'observateur parallèlement au plan de l'écran E permet de voir à travers différents couples de lenticules du réseau lenticulaire. La scène est perçue pareillement avec une translation égale au pas p des lenticules du réseau multiplié par le facteur de grandissement (vision de type "modulo").

En général, les N images seront disponibles avec un rapport d'anamorphose n égal à N.

En ce qui concerne le rapport de désanamorphose nₒ, celui-ci peut être sensiblement égal à n.

Il sera possible de réaliser un changement de format en choisissant nₒ sensiblement égal à Kn, K étant un rapport de changement de format (par exemple K=4/3 pour passer du format 4/3 au format 16/9). Ceci peut être mis en oeuvre avec chacun des modes de réalisation décrits (figures 1 à 5).

## Revendications

1. Dispositif de visualisation d'une image stéréoscopique comprenant N points de vue (avec N > 1), ledit dispositif comportant un dispositif de génération d'une image stéréoscopique (I) à visualiser ainsi qu'un réseau lenticulaire comprenant des lenticules cylindriques disposés côte à côte et ayant des axes longitudinaux parallèles à une première direction perpendiculaire à un axe optique du dispositif, **caractérisé en ce que** ladite image stéréoscopique (I) à visualiser est constituée de N images élémentaires anamorphosées dans un rapport n parallèlement à un deuxième direction perpendiculaire à la première direction et au premier axe optique et **en ce qu'**il comporte successivement de l'amont vers l'aval à partir de ladite image stéréoscopique à visualiser :
- ledit réseau lenticulaire (RL), lequel comporte un nombre de lenticules cylindriques convergents qui est égal à N ou à un multiple de N,
- un ensemble optique cylindrique convergent (LCY) comprenant au moins une lentille cylindrique dont l'axe longitudinal est disposé selon ladite deuxième direction qui est perpendiculaire à la première direction et au premier axe optique,
- un élément optique convergent (LCH,M) faisant fonction de lentille de champ convergente,
**en ce que** le rapport entre la distance focale de l'ensemble optique cylindrique (LCY) et la distance focale du réseau lenticulaire (RL) est sensiblement égal à n avec n >1, et **en ce que** le réseau lenticulaire (RL) et l'ensemble optique cylindrique (LCY) ont un plan objet commun dans lequel est disposée ladite image stéréoscopique (I) à visualiser.

2. Dispositif selon la revendication 1, **caractérisé en ce qu'**il comporte un écran de projection comportant un dépoli (DEP) et au moins un réseau cylindrique (RL₁, RL₂), disposé en aval de l'élément optique convergent (LCH, M), ledit nombre de lenticules cylindriques convergents du réseau lenticulaire (RL) étant égal à N.

3. Dispositif selon la revendication 1, **caractérisé en ce qu'**il comporte une paire de réseaux lenticulaires (RL'₁, RL'₂) disposés en aval de l'ensemble optique cylindrique convergent (LCY), ledit nombre de lenticules cylindriques convergents du réseau lenticulaire (RL) étant égal à N.

4. Dispositif de visualisation d'une image stéréoscopique comprenant N points de vue (avec N > 1), ledit dispositif comportant un dispositif de génération d'une image stéréoscopique à visualiser ainsi qu'un réseau lenticulaire comprenant des lenticules cylindriques disposés côte à côte et ayant des axes longitudinaux parallèles à une première direction perpendiculaire à un axe optique du dispositif, **caractérisé en ce que** ladite image stéréoscopique à visualiser est constituée de N images élémentaires anamorphosées dans un rapport n parallèlement à une deuxième direction perpendiculaire à la première direction et au premier axe optique et **en ce qu'**il comporte successivement de l'amont vers l'aval à partir d'une image à visualiser :
- ledit réseau lenticulaire (RL), lequel comporte au moins N lenticules cylindriques convergents,
- un ensemble optique cylindrique convergent (LCY) comprenant au moins une lentille cylindrique dont l'axe longitudinal est disposé selon une deuxième direction qui est perpendiculaire à la première direction et au premier axe optique,
- un écran de projection comportant un dépoli (DEP) et au moins un réseau cylindrique (RL₁,RL₂).
**en ce que** le rapport entre la distance focale de l'ensemble optique cylindrique (LCY) et la distance focale du réseau lenticulaire (RL) est sensiblement égal à n avec n >1, et **en ce que** le réseau lenticulaire (RL) et l'ensemble optique cylindrique (LCY) ont un plan objet commun dans lequel est disposée ladite image stéréoscopique (I) à visualiser.

5. Dispositif selon une quelconque des revendications précédentes, **caractérisé en ce que** l'image stéréoscopique à visualiser (I) est affichée sur un dépoli ou sur un écran (E).

6. Dispositif selon une quelconque des revendications précédentes, **caractérisé en ce que** l'image stéréoscopique à visualiser (I) est une diapositive ou un film (F) éclairé à l'aide d'une source de lumière répartie (L,D).

7. Dispositif selon une quelconque des revendications précédentes, **caractérisé en ce qu'**il comporte successivement de l'amont vers l'aval ledit réseau lenticulaire (RL), ledit ensemble optique cylindrique convergent (LCY), un élément optique convergent (LCH,M) un premier réseau (RL'₁) d'une paire de réseaux lenticulaires (RL'₁,RL'₂), éventuellement ledit dépoli (DEP), et le deuxième réseau (RL'₂) de ladite paire.

8. Dispositif selon une des revendications précédentes, **caractérisé en ce que** l'ensemble optique cylindrique (LCY) comporte deux lentilles cylindriques formant un doublet convergent.

9. Dispositif selon la revendication 8, **caractérisé en ce que** ledit doublet présente une focale réglable.

10. Dispositif selon une des revendications 1 à 3 et 7 à 9, **caractérisé en ce que** le plan de la pupille de l'élément optique convergent (LCH) et le plan de l'image stéréoscopique (I) à visualiser sont sensiblement en position de conjugaison à travers le système constitué par l'ensemble optique cylindrique convergent (LCY) et le réseau lenticulaire (RL).

11. Dispositif selon une des revendications précédentes, **caractérisé en ce que** le pas P des points de vue de l'image à visualiser et le pas p des lenticules du réseau lenticulaire (RL) sont dans un rapport tel que les images des centres de chaque point de vue à travers le réseau lenticulaire (RL) et l'ensemble optique cylindrique convergent (LCY) se superposent au plan image de ladite image à visualiser, formé à travers le réseau lenticulaire (RL) et l'ensemble optique cylindrique convergent (LCY).

12. Dispositif selon une des revendications 7 à 11, **caractérisé en ce que** l'élément optique convergent (LCH) est une lentille convergente ou une lentille de Fresnel.

13. Dispositif selon une des revendications 7 à 11, **caractérisé en ce que** l'élément optique convergent (M) est un miroir, de préférence parabolique, au moins partiellement réfléchissant, qui replie l'axe optique (X'₁X₁).

14. Dispositif selon la revendication 13, **caractérisé en ce que** l'ensemble optique cylindrique (LCY) et le réseau lenticulaire (RL) sont décentrés selon la première direction tout en restant parallèles, de manière à définir un axe optique X'₁X₁ incliné en direction dudit miroir convergent.

15. Dispositif selon une des revendications 13 ou 14, **caractérisé en ce qu'**il constitue un visuel de casque et **en ce que** N=2.

16. Dispositif selon une des revendications 1 à 12, **caractérisé en ce qu'**il comporte un miroir plan (MSR) au moins partiellement réfléchissant incliné, de préférence de 45°, par rapport audit axe optique pour définir un axe de visualisation de préférence perpendiculaire audit axe optique.

17. Dispositif selon la revendication 16, **caractérisé en ce que** le miroir plan (MSR) est partiellement réfléchissant et **en ce qu'**il comporte une caméra de prise de vue stéréoscopique (STCAM) disposée de manière à filmer à travers le miroir plan (MSR) un observateur disposé à la position de visualisation (P).

18. Dispositif selon une des revendications précédentes, **caractérisé en ce que** le réseau lenticulaire (RL) comporte au moins 2N lenticules.

19. Dispositif selon une des revendications précédentes, **caractérisé en ce que** N = n.

20. Dispositif selon une des revendications 1 à 10 et 12 à 19, **caractérisé en ce que** le pas p des lenticules et le pas P des images d'un couple stéréoscopique à visualiser est choisi pour que les images des centres de chaque point de vue à travers le réseau lenticulaire (RL) et l'ensemble optique cylindrique (LCY) se superposent dans le plan image de l'image à visualiser (I) à travers ledit réseau (RL) et ledit ensemble optique cylindrique convergent (LCY).

## Patentansprüche

1. Einrichtung für das Sichtbarmachen eines stereoskopischen Bildes, umfassend N Blick- bzw. Augenpunkte (mit N > 1), wobei diese Einrichtung eine Einrichtung für die Erzeugung eines sichtbar zu machenden stereoskopischen Bilds (1) sowie ein Linsenraster hat, das zylindrische Linsen enthält, die Seite an Seite angeordnet sind und Längsachsen haben, welche parallel zu einer ersten Richtung sind, die senkrecht zu einer optischen Achse der Einrichtung ist, **dadurch gekennzeichnet, dass** das sichtbar zu machende stereoskopische Bild (1) von N anamorphosierten Elementarbildern in einem Verhältnis bzw. Abstand n parallel zu einer zweiten Richtung, die senkrecht zu der ersten Richtung und zu der ersten optischen Achse ist, gebildet ist, und dass sie aufeinanderfolgend von aufwärts nach abwärts, ausgehend von dem sichtbar zu machenden stereoskopischen Bild, folgendes enthält:
- das genannte Linsenraster (RL), welches eine Anzahl von konvergenten zylindrischen Linsen enthält, die gleich N oder einem Vielfachen von N ist,
- einen konvergenten zylindrischen optischen Aufbau (LCY), der wenigstens eine zylindrische Linse umfasst, deren Längsachse gemäß der genannten zweiten Richtung, die senkrecht zu der ersten Richtung und zu der ersten optischen Achse ist, angeordnet ist,
- ein konvergentes optisches Element (LCH, M), das die Funktion einer konvergenten Feldlinse hat,
- dass das Verhältnis zwischen der Brennweite des zylindrischen optischen Aufbaus (LCY) und der Brennweite des Linsenrasters (RL) im Wesentlichen gleich n ist, mit n > 1, und dass das Linsenraster (RL) und der zylindrische optische Aufbau (LCY) eine Objektebene gemeinsam haben, in welcher das sichtbar zu machende stereoskopische Bild (1) angeordnet ist.

2. Einrichtung gemäß dem Anspruch 1, **dadurch gekennzeichnet, dass** sie einen Projektionsschirm hat, der eine Mattscheibe (DEP) und wenigstens ein zylindrisches Raster (RL₁, RL₂) enthält, das bzw. die abwärts von dem konvergenten optischen Element (LCH, M) angeordnet ist bzw. sind, wobei die genannte Anzahl von konvergenten zylindrischen Linsen des Linsenrasters (RL) gleich N ist.

3. Einrichtung gemäß dem Anspruch 1, **dadurch gekennzeichnet, dass** sie ein Paar von Linsenrastern (RL'₁, RL'₂) enthält, das abwärts von dem konvergenten zylindrischen optischen Aufbau (LCY) angeordnet ist, wobei die genannte Anzahl von konvergenten zylindrischen Linsen des Linsenrasters (RL) gleich N ist.

4. Einrichtung zum Sichtbarmachen eines stereoskopischen Bilds, umfassend N Blick- bzw. Augenpunkte (mit N > 1), wobei die Einrichtung eine Einrichtung für die Erzeugung eines sichtbar zu machenden stereoskopischen Bilds sowie ein Linsenraster enthält, das zylindrische Linsen enthält, die Seite an Seite angeordnet sind und Längsachsen haben, die parallel zu einer ersten Richtung sind, welche senkrecht zu einer optischen Achse der Einrichtung ist, **dadurch gekennzeichnet, dass** das sichtbar zu machende stereoskopische Bild von N anamorphosierten Elementarbildern in einem Verhältnis bzw. Abstand n parallel zu einer zweiten Richtung gebildet ist, die senkrecht zu der ersten Richtung und zu der ersten optischen Achse ist, und dass sie aufeinanderfolgend, ausgehend von einem sichtbar zu machenden Bild, von aufwärts nach abwärts zu folgendes enthält:
- das genannte Linsenraster (RL), welches wenigstens N konvergente zylindrische Linsen hat,
- einen konvergenten zylindrischen optischen Aufbau (LCY), der wenigstens eine zylindrische Linse umfasst, deren Längsachse gemäß einer zweiten Richtung, die senkrecht zu der ersten Richtung und zu der ersten optischen Achse ist, angeordnet ist,
- einen Projektionsschirm, der eine Mattscheibe (DEP) und wenigstens ein zylindrisches Raster (RL₁, RL₂) enthält,
- dass das Verhältnis zwischen der Brennweite des zylindrischen optischen Aufbaus (LCY) und der Brennweite des Linsenrasters (RL) im Wesentlichen gleich n ist, mit n > 1, und dass das Linsenraster (RL) und der zylindrische optische Aufbau (LCY) eine Objektebene gemeinsam haben, in welcher das sichtbar zu machende stereoskopische Bild (1) angeordnet ist.

5. Einrichtung gemäß irgendeinem der vorhergehenden Ansprüche, **dadurch gekennzeichnet, dass** das sichtbar zu machende stereoskopische Bild (1) auf einer Mattscheibe oder auf einem Schirm (E) gezeigt wird.

6. Einrichtung gemäß irgendeinem der vorhergehenden Ansprüche, **dadurch gekennzeichnet, dass** das sichtbar zu machende stereoskopische Bild (1) ein Diapositiv oder ein Film (F) ist, das bzw. der mithilfe einer verteilten bzw. gesplitteten bzw. nichtstationären Lichtquelle (L, D) beleuchtet wird.

7. Einrichtung gemäß irgendeinem der vorhergehenden Ansprüche, **dadurch gekennzeichnet, dass** sie aufeinanderfolgend von aufwärts nach abwärts zu das genannte Linsenraster (R, L), den konvergenten zylindrischen optischen Aufbau (LCY), ein konvergentes optisches Element (LCH, M), ein erstes Raster (RL'1) eines Paar von Linsenrastern (RL'₁, RL'₂), eventuell die genannte Mattscheibe (DEP) und das zweite Raster (RL'2) des genannten Paars enthält.

8. Einrichtung gemäß einem der vorhergehenden Ansprüche, **dadurch gekennzeichnet, dass** der zylindrische optische Aufbau (LCY) zwei zylindrische Linsen enthält, die ein konvergentes Dublett bilden.

9. Einrichtung gemäß dem Anspruch 8, **dadurch gekennzeichnet, dass** das Dublett eine rege- bzw. regulierbare Brennweite aufweist.

10. Einrichtung gemäß einem der Ansprüche 1 bis 3 und 7 bis 9, **dadurch gekennzeichnet, dass** die Ebene der Pupille des konvergenten optischen Elements (LCH) und die Ebene des sichtbar zu machenden stereoskopischen Bilds (1) im Wesentlichen in einer Position der Konjugation quer über das System sind, welches durch den konvergenten zylindrischen optischen Aufbau (LCY) und das Zylinderraster (RL) gebildet wird.

11. Einrichtung gemäß einem der vorhergehenden Ansprüche, **dadurch gekennzeichnet, dass** die Teilung P der Blick- bzw. Augenpunkte des sichtbar zu machenden Bilds und die Teilung p der Linsen des Linsenrasters (RL) in einem solchen Verhältnis sind, dass sich die Bilder der Zentren von jedem Blick- bzw. Augenpunkt quer über das Linsenraster (RL) und den konvergenten optischen zylindrischen Aufbau (LCY) in der Bildebene des sichtbar zu machenden Bilds überlagern, gebildet quer über das Linsenraster (RL) und den konvergenten zylindrischen optischen Aufbau (LCY).

12. Einrichtung gemäß einem der Ansprüche 7 bis 11, **dadurch gekennzeichnet, dass** das konvergente optische Element (LCH) eine konvergente Linse oder eine Fresnellinse ist.

13. Einrichtung gemäß einem der Ansprüche 7 bis 11, **dadurch gekennzeichnet, dass** das konvergente optische Element (M) ein Spiegel, vorzugsweise ein parabolischer Spiegel, ist, der wenigstens teilweise reflektiertend ist, welcher die optische Achse (X'₁X₁) umbiegt bzw umlenkt.

14. Einrichtung gemäß dem Anspruch 13, **dadurch gekennzeichnet, dass** der optische zylindrische Aufbau (LCY) und das Linsenraster (RL) gemäß der ersten Richtung dezentriert sind, während sie parallel bleiben, und zwar in der Art und Weise, dass eine optische Achse X'₁X₁ definiert wird, die in der Richtung des genannten konvergenten Spiegels geneigt ist.

15. Einrichtung gemäß einem der Ansprüche 13 oder 14, **dadurch gekennzeichnet, dass** sie eine Sichtanzeige eines Helms bildet und dass N = 2.

16. Einrichtung gemäß einem der Ansprüche 1 bis 12, **dadurch gekennzeichnet, dass** sie einen ebenen Spiegel (MSR), der wenigstens teilweise reflektierend ist, welcher mit Bezug auf die genannte optische Achse geneigt ist, vorzugsweise um 45°, um eine Achse des Sichtbarmachens, vorzugsweise senkrecht zu der genannten optischen Achse, zu definieren, enthält.

17. Einrichtung gemäß dem Anspruch 16, **dadurch gekennzeichnet, dass** der ebene Spiegel (MSR) teilweise reflektierend ist, und dass sie eine Kamera für die Aufnahme von stereoskopischen Ansichten (STCAM) hat, die in der Art und Weise angeordnet ist, dass quer über bzw. durch den ebenen Spiegel (MSR) ein Beobachter gefilmt wird, der in der Position des Sichtbarmachens (P) angeordnet ist.

18. Einrichtung gemäß einem der vorhergehenden Ansprüche, **dadurch gekennzeichnet, dass** das Linsenraster (RL) wenigstens 2N Linsen enthält.

19. Einrichtung gemäß einem der vorhergehenden Ansprüche, **dadurch gekennzeichnet , dass** N = n ist.

20. Einrichtung gemäß einem der Ansprüche 1 bis 10 und 12 bis 19, **dadurch gekennzeichnet, dass** die Teilung p der Linsen und die Teilung P der Bilder eines sichtbar zu machenden stereoskopischen Paars so gewählt ist, dass sich die Bilder der Zentren von jedem Gesichts- bzw. Augenpunkt quer über das Linsenraster (RL) und den zylindrischen optischen Aufbau (LCY) in der Bildebene des sichtbar zu machenden Bilds (1) quer über bzw. durch das genannte Raster (RL) und den genannten konvergenten zylindrischen Aufbau (LCY) überlagern.

## Claims

1. A viewer for viewing a stereoscopic image having N viewpoints (with N > 1), said viewer having a device for generating a stereoscopic image (I) to be viewed, and a lens array comprising cylindrical lenses placed side by side with longitudinal axes parallel to a first direction perpendicular to an optical axis of the viewer, the viewer being **characterized in that** said stereoscopic image (I) to be viewed is constituted by N elementary images that have been anamorphosed in a ratio n parallel to a second direction which is perpendicular to the first direction and to the first optical axis, and **in that** it comprises successively, from upstream to downstream, and starting from said stereoscopic image to be viewed:
- said lens array (RL), which has a number of converging cylindrical lenses that is equal to N or to a multiple of N;
- a converging cylindrical optical unit (LCY) comprising at least one cylindrical lens whose longitudinal axis is disposed in said second direction which is perpendicular to the first direction and to the first optical axis; and
- a converging optical element (LCH, M) acting as a converging field lens;
**in that** the ratio of the focal length of the cylindrical optical unit (LCY) over the focal length of the lens array (RL) is substantially equal to n where n > 1, and **in that** the lens array (RL) and the cylindrical optical unit (LCY) have a common object plane in which said stereoscopic image (I) to be viewed.

2. A viewer according to claim 1, **characterized in that** it has a projection screen including a frosted screen (DEP) and at least one cylindrical array (RL₁, RL₂) disposed downstream from the converging optical element (LCH, M), said number of converging cylindrical lenses of the lens array (RL) being equal to N.

3. A viewer according to claim 1, **characterized in that** it includes a pair of lens arrays (RL'₁, RL'₂) placed downstream from the converging cylindrical optical unit (LCY), said number of converging cylindrical lenses of the lens array (RL) being equal to N.

4. A viewer for viewing a stereoscopic image having N viewpoints (with N > 1), said viewer having a device for generating a stereoscopic image to be viewed, and a lens array comprising cylindrical lenses placed side by side with longitudinal axes parallel to a first direction perpendicular to an optical axis of the viewer, the viewer being **characterized in that** said stereoscopic image to be viewed is constituted by N elementary images that have been anamorphosed in a ratio n parallel to a second direction which is perpendicular to the first direction and to the first optical axis, and **in that** it comprises successively, from upstream to downstream, and starting from an image to be viewed:
- said lens array (RL), which has at least N converging cylindrical lenses;
- a converging cylindrical optical unit (LCY) comprising at least one cylindrical lens whose longitudinal axis is disposed in a second direction which is perpendicular to the first direction and to the first optical axis; and
- a projection screen including a frosted screen (DEP) and at least one cylindrical array (RL₁, RL₂);
**in that** the ratio of the focal length of the cylindrical optical unit (LCY) over the focal length of the lens array (RL) is substantially equal to n where n > 1, and **in that** the lens array (RL) and the cylindrical optical unit (LCY) have a common object plane in which said stereoscopic image (I) to be viewed is placed.

5. A viewer according to any preceding claim, **characterized in that** the stereoscopic image (I) to be viewed is displayed on a frosted or other screen (E).

6. A viewer according to any preceding claim, **characterized in that** the stereoscopic image to be viewed (I) is a slide or a film (F) lit from a diffuse light source (L, D).

7. A viewer according to any preceding claim, **characterized in that** it comprises in succession from upstream to downstream: said lens array (RL); said converging cylindrical optical unit (LCY); a converging optical element (LCH, M); a first array (RL'₁) of a pair of lens arrays (RL'₁, RL'₂), possibly said frosted screen (DEP), and the second array (RL'₂) of said pair.

8. A viewer according to any preceding claim, **characterized in that** the cylindrical optical unit (LCY) comprises two cylindrical lenses forming a converging doublet.

9. A viewer according to claim 8, **characterized in that** said doublet is of adjustable focal length.

10. A viewer according to any one of claims 1 to 3 and 7 to 9, **characterized in that** the plane of the pupil of the converging optical element (LCH) and the plane of the stereoscopic image (I) to be viewed are substantially in conjugate positions through the system constituted by the converging cylindrical optical unit (LCY) and the lens array (RL).

11. A viewer according to any preceding claim, **characterized in that** the pitch P of the viewpoints of the image to be viewed and the pitch p of the lenses of the lens array (RL) are in a ratio such that the images of the centers of the respective viewpoints through the lens array (RL) and the converging cylindrical optical unit (LCY) superpose in the plane of said image to be viewed as formed through the lens array (RL) and the converging cylindrical optical unit (LCY).

12. A viewer according to any one of claims 7 to 11, **characterized in that** the converging optical element (LCH) is a converging lens or a Fresnel lens.

13. A viewer according to any one of claims 7 to 11, **characterized in that** the converging optical element (M) is a mirror, preferably a parabolic mirror, and at least partially reflecting, which folds the optical axis (X'₁X₁).

14. A viewer according to claim 13, **characterized in that** the cylindrical optical unit (LCY) and the lens array (RL) are offset in the first direction while remaining parallel, so as to define an optical axis X'₁X₁ inclined towards said converging mirror.

15. A viewer according to claim 13 or 14, **characterized in that** it constitutes a helmet display and **in that** N = 2.

16. A viewer according to any one of claims 1 to 12, **characterized in that** it includes an at least partially reflecting plane mirror (MSR) inclined, preferably at 45°, relative to said optical axis so as to define a viewing axis that is preferably perpendicular to said optical axis.

17. A viewer according to claim 16, **characterized in that** the plane mirror (MSR) is partially reflecting and **in that** the viewer includes a stereoscopic camera (STCAM) disposed in such a manner as to look through the plane mirror (MSR) to film an observer situated in the viewing position (P).

18. A viewer according to any preceding claim, **characterized in that** the lens array (RL) has at least 2N lenses.

19. A viewer according to any preceding claim, **characterized in that** N = n.

20. A viewer according to any one of claims 1 to 10 and 12 to 19, **characterized in that** the pitch p of array lenses and the pitch P of the images of a stereoscopic pair to be viewed are selected in such a manner that the images of the centers of each of the viewpoints through the lens array (RL) and the cylindrical optical unit (LCY) superpose in the plane of the image to be viewed (I) through said array (RL) and said converging cylindrical optical unit (LCY).
